(19) **Europäisches Patentamt / European Patent Office / Office européen des brevets**

(11) **EP 4 307 454 A1**

(12) # EUROPEAN PATENT APPLICATION
published in accordance with Art. 153(4) EPC

(43) Date of publication:
**17.01.2024 Bulletin 2024/03**

(21) Application number: **22765387.0**

(22) Date of filing: **07.03.2022**

(51) International Patent Classification (IPC):
**H01M 50/451** (2021.01)   **H01M 10/08** (2006.01)
**H01M 50/431** (2021.01)   **H01M 50/434** (2021.01)
**H01M 50/443** (2021.01)   **H01M 50/46** (2021.01)
**H01M 50/489** (2021.01)

(52) Cooperative Patent Classification (CPC):
**H01M 10/08; H01M 50/431; H01M 50/434;
H01M 50/443; H01M 50/451; H01M 50/46;
H01M 50/489; Y02E 60/10**

(86) International application number:
**PCT/JP2022/009820**

(87) International publication number:
**WO 2022/191150 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.03.2021 JP 2021038228
31.08.2021 JP 2021141628**

(71) Applicant: **Asahi Kasei Kabushiki Kaisha
Tokyo 1000006 (JP)**

(72) Inventors:
• **IWAMA, Juri**
  **Tokyo 100-0006 (JP)**
• **IIZUKA, Yasuhito**
  **Tokyo 100-0006 (JP)**
• **KIYAMA, Tomonori**
  **Tokyo 100-0006 (JP)**

(74) Representative: **Strehl Schübel-Hopf & Partner
Maximilianstrasse 54
80538 München (DE)**

(54) **SEPARATOR FOR LEAD ACID STORAGE BATTERIES, AND LEAD ACID STORAGE BATTERY**

(57)    The present invention provides: a separator for lead acid storage batteries, the separator exhibiting excellent charge acceptance performance and excellent liquid loss characteristics when in use under PSoC, while being not susceptible to the occurrence of ply separation within a lead acid storage battery and having good ER; and a lead acid storage battery which uses this separator for lead acid storage batteries. The present invention provides a separator for lead acid storage batteries, the separator comprising a base material and a conductive layer that is superposed on at least one surface of the base material. The conductive layer comprises: a continuous phase that is formed of a conductive material; and dispersed phases in the continuous phase, the dispersed phases being formed of at least one low-potential metal material that is selected from the group consisting of metals having a standard electrode potential of -0.7 V or less, metal compounds containing these metals, and combinations of these metals and metal compounds.

FIG. 1

1 μm

EP 4 307 454 A1

**Description**

FIELD

The present disclosure relates to a separator for a lead-acid battery as well as a lead-acid battery which uses the same.

BACKGROUND

Lead-acid batteries are widely used worldwide in automotive applications such as passenger cars, buses, trucks, motorcycles, and golf carts, as well as industrial applications such as forklifts, farm machinery, railroads, UPS, and communication equipment. In recent years, in particular, in in-vehicle applications, performance which can support operation at approximately 50% to 80% partial state of charge (PSoC), such as in hybrid electric vehicles (HEV) and idling start and stop (ISS) vehicles, is required.

The primary performance requirements for lead-acid batteries are charge acceptance, cycle performance, and water loss characteristics (water loss performance). Lead-acid batteries having charge control functions and regenerative charging functions to improve environmental performance and fuel efficiency have short and limited charging opportunities. Thus, charge acceptance is required in order to efficiently charge the battery with a large amount of energy. If the battery is maintained at a PSoC for a long time, the cycle characteristics tend to deteriorate. The reason for this is that in PSoC batteries, highly crystalline sulfate is likely to form on the electrode surface, and the accumulation of the formed sulfate crystals dramatically reduces the charge acceptance performance of the electrode (sulfation), which ultimately leads to the end of its life. When the negative electrode reaches the hydrogen generation potential, water is decomposed and water loss occurs. Thus, from the viewpoint of maintainability, it is necessary to improve and maintain the water loss characteristics.

Separators for lead-acid batteries are generally membranes having a microporous structure with withstand voltage characteristics, and are arranged in close contact with the surfaces of both the positive electrode and the negative electrode in order to prevent short-circuiting between the electrodes. By improving the structure of the separator and controlling an electrode surface reaction, which occurs on the contact surface between the separator and the electrode, an improvement in the performance of the battery can be expected.

Conventionally, a structure (also simply referred to as a "layer" or "coating layer") is provided on the surface of the substrate of the separator for a lead-acid battery in the separator surface (x-axis y-axis plane) direction so as to function as an auxiliary conductive path of the electrode for the purpose of promoting the electrode surface reaction and improving charge acceptance and cycle characteristics. However, since the electrical resistance (hereinafter referred to as "ER") of the separator in the electrolyte is increased by this structure, there are problems in that the internal resistance of the battery is increased and a decrease in the initial discharge capacity of the lead-acid battery occurs.

Patent Literature 1 discloses a technology of using a battery separator having a zinc salt applied or added thereto to reduce float current, reduce water loss, and improve cycle life in lead-acid batteries.

Patent Literature 2 discloses a technology of using a battery separator having an engineered carbon material applied or added thereto to improve charge acceptance and cycle life of lead-acid batteries.

Patent Literature 3 discloses a technology of using a battery separator having zinc oxide added thereto as a filler to improve charge acceptance, improve surface conductivity, and reduce acid stratification in lead-acid batteries.

[CITATION LIST]

[PATENT LITERATURE]

[PTL 1] WO 2017/143212
[PTL 2] WO 2015/171595
[PTL 3] WO 2017/062461

SUMMARY

[TECHNICAL PROBLEM]

Patent Literature 1 and 3 do not describe improvements in charge acceptance performance after a certain cycle, water loss characteristics (water loss performance) when using the battery under PSoC (during the cycle), and the ER, nor the means therefor. Furthermore, Patent Literature 2 does not describe improvements in water loss characteristics and ER when using the battery under PSoC (during the cycle) nor the means therefor.

An object of the present disclosure is to provide a separator for a lead-acid battery having excellent charge acceptance performance, excellent water loss characteristics when used under PSoC, and reduced layer peeling in lead-acid batteries, and suitable ER, and a lead-acid battery using the same.

[SOLUTION TO PROBLEM]

Examples of embodiments of the present disclosure are listed below.

[1] A separator for a lead-acid battery, comprising a substrate and a conductive layer laminated on at least one surface of the substrate, wherein
the conductive layer has a continuous phase formed of a conductive material, and a dispersed phase in the continuous phase, the dispersed phase being formed of at least one low-potential metal material selected from the group consisting of a metal having a standard electrode potential of - 0.7 V or less, a metal compound containing the metal, and a combination thereof.

[2] The separator for a lead-acid battery according to Item 1, wherein a percentage of an area of the dispersed phase to an area of the continuous phase in a cross-sectional view in an MD-ND cross section of the conductive layer is 1% or more and 60% or less.

[3] The separator for a lead-acid battery according to Item 1 or 2, wherein the low-potential metal material comprises zinc or a zinc compound.

[4] The separator for a lead-acid battery according to any one of Items 1 to 3, wherein the conductive material comprises a carbon material.

[5] The separator for a lead-acid battery according to any one of Items 1 to 4, wherein an average value of distances between nearest dispersed phases in an MD-ND cross section of the conductive layer is 0.1 $\mu$m to 2 $\mu$m.

[6] The separator for a lead-acid battery according to any one of Items 1 to 5, wherein a maximum diameter of the low-potential metal material is 0.1 $\mu$m or more and 15 $\mu$m or less.

[7] The separator for a lead-acid battery according to any one of Items 1 to 6, wherein an amount of the low-potential metal material is 5 wt% to 60 wt% relative to the weight of the entire conductive layer.

[8] The separator for a lead-acid battery according to any one of Items 1 to 7, wherein the low-potential metal material is at least one selected from the group consisting of zinc oxide and zinc sulfate.

[9] The separator for a lead-acid battery according to any one of Items 1 to 8, wherein the carbon material comprises at least one selected from the group consisting of furnace black, acetylene black, ketjen black, and carbon nanotubes.

[10] A lead-acid battery, comprising a positive electrode, a negative electrode, and the separator according to any one of Items 1 to 9 between the positive electrode and the negative electrode.

[11] A lead-acid battery, comprising a positive electrode, a negative electrode, a separator arranged between the positive electrode and the negative electrode, and an electrolyte, wherein
the separator comprises:

a substrate and a conductive layer laminated on at least one surface of the substrate,
the conductive layer comprises a conductive material, and pores are present in the conductive layer,
a percentage of an area of the pores to an area of the conductive layer in a cross-sectional view in an MD-ND cross section of the conductive layer is 1% or more and 60% or less, and
the electrolyte comprises at least one low-potential metal material selected from the group consisting of a metal having a standard electrode potential of -0.7 V or less, a metal compound containing the metal, and a combination thereof.

[12] The lead-acid battery according to Item 11, wherein the low-potential metal material is zinc or a zinc compound.

[13] The lead-acid battery according to Item 11 or 12, wherein the conductive material comprises a carbon material.

[ADVANTAGEOUS EFFECTS OF INVENTION]

According to the present disclosure, there can be provided a separator for a lead-acid battery having excellent charge acceptance performance, excellent water loss characteristics when used under PSoC, and reduced layer peeling in lead-acid batteries, and suitable ER, and lead-acid battery using the same.

BRIEF DESCRIPTION OF DRAWINGS

FIG. 1 is an example of a cross-sectional image of the separator for a lead-acid battery having a conductive layer of Example 1, captured by SEM.
FIG. 2 is a conceptual view showing a method for measuring an average value of the distances between nearest dispersed phases.

DESCRIPTION OF EMBODIMENTS

**Separator for Lead-Acid Battery**

The separator for a lead-acid battery of the present disclosure (hereinafter referred to simply as "separator") comprises a substrate and a conductive layer laminated on at least one surface of the substrate. The conductive layer has a continuous phase formed of an electrically conductive material, and a dispersed phase in the continuous phase, the dispersed phase being formed of at least one low-potential metal material selected from the group consisting of a metal having a standard electrode potential of -0.7 V or less, a metal compound containing a metal having a standard electrode potential of -0.7 V or less, and a combination thereof (in the present description, hereinafter referred to simply as a "low-potential metal material"). The separator is arranged between a positive electrode and a negative electrode to prevent electrical shorting between the positive and negative electrodes. The conductive layer may be laminated to both sides of the substrate and may be fully or partially laminated to one or both sides of the substrate. As used herein, the case where the conductive layer is said to be "laminated" on one or both sides of the substrate encompasses the case where the conductive layer is directly laminated on the substrate and the case where it is indirectly laminated via another layer.
The separator for a lead-acid battery of the present disclosure has excellent charge acceptance performance, excellent water loss characteristics when used under PSoC, and reduced layer peeling in lead-acid batteries, and suitable ER. Though not to be limited by theory, the reason is presumed as follows. Specifically, conventionally, in order to promote electrode surface reaction by acting as an auxiliary conductive path for the electrode and to improve charge acceptance and cycling characteristics, a structure (also simply referred to as a "surface layer") is provided on the surface of the substrate of the separator for a lead-acid battery in the separator surface (x-axis y-axis plane) direction. Examples of the material of such a surface layer include inorganic substances, organic substances, and mixtures of organic and inorganic substances. Furthermore, conventionally, a metal or a metal compound is added to the surface layer in order to suppress deterioration of the water loss characteristics. However, since such a structure increases ER, there are problems in that the internal resistance of the battery increases and the initial discharge capacity of the lead-acid battery decreases. Conversely, the inventors have discovered that by providing the surface layer with a conductive material and a metal having a standard electrode potential of -0.7 V or less, or a metal compound containing a metal having a standard electrode potential of -0.7 V or less, and designing the surface layer so that the conductive material forms a continuous phase and the metal or metal compound forms a dispersed phase, the formation of conductive paths on the separator surface can be partially limited, and as a result, the water decomposition reaction can be reduced, and the deterioration of the water loss characteristics can be suppressed. Since sulfation is suppressed due to conductive paths on the surface of the separator, charge acceptance performance can be improved. Since the phase formed of a conductive material is a continuous phase, peeling of the layers is less likely to occur. Since the conductive layer has pores, the ER is suitable. It is believed that as a result thereof, a separator for a lead-acid battery having excellent charge acceptance performance, excellent water loss characteristics when used under PSoC, and reduced layer peeling in lead-acid batteries, and suitable ER can be provided.

Conductive Layer

The conductive layer has a continuous phase and a dispersed phase in the continuous phase. A percentage of an area of the dispersed phase to an area of the continuous phase in a cross-sectional view in an MD-ND cross section of the conductive layer, from the viewpoint of improving the conductivity of the conductive layer, is preferably 1% or more and 60% or less, more preferably 1% or more and 55% or less, and further preferably 1% or more and 50% or less.
From the viewpoint of suppressing peeling of the conductive layer and detachment thereof from the separator, and forming a uniform conductive layer on the surface of the substrate, the thickness of the conductive layer is preferably 0.1 $\mu$m to 30 $\mu$m, more preferably 0.1 $\mu$m to 25 $\mu$m further preferably 0.1 $\mu$m to 20 $\mu$m, and even further preferably 0.1 $\mu$m to 15 $\mu$m.

Conductive Material

The continuous phase is formed of a conductive material. The continuous phase may comprise materials other than the conductive material as long as the conductive paths of the conductive material are not lost. The conductive material preferably comprises a carbon material from the viewpoint of conductivity. Examples of carbon materials include carbon clusters such as graphite, activated carbon, carbon black, graphene, and fullerenes, carbon monolithic materials, and mixtures thereof. Among the above carbon materials, furnace black, acetylene black, ketjen black, graphite, and carbon nanotubes are more preferable from the viewpoint of conductivity, and furnace black, acetylene black, ketjen black, and carbon nanotubes are even further preferable.

The median particle diameter (d50) of the conductive material, and preferably the carbon material, is preferably 0.01 μm to 50 μm, more preferably 0.01 μm to 30 μm, and further preferably 0.01 μm to 10 μm, from the viewpoint of facilitating formation of a uniform layer thickness.

Low-Potential Metal Material

The dispersed phase is formed of a low-potential metal material selected from the group consisting of a metal having a standard electrode potential of -0.7 V or less, a metal compound containing a metal having a standard electrode potential of -0.7 V or less as a constituent element thereof, and a combination thereof. The dispersed phase preferably comprises a low-potential metal material. By providing the dispersed phase in the conductive layer, the formation of conductive paths on the surface of the separator can be partially suppressed, and as a result, the water decomposition reaction can be reduced, whereby deterioration of the water loss characteristics can be suppressed. Though the form of the low-potential metal material is not limited, it is preferably in the form of particles. The phase in the dispersed phase may be formed of a single particle of the low-potential metal material, or may be formed by agglomeration of a plurality of particles. The standard electrode potential is the electrode potential when the activities of substances involved in a certain electrochemical reaction are all 1 and they are in an equilibrium state, and the potential of a standard hydrogen electrode is expressed as 0 V. The low-potential metal material preferably does not comprise a metal having a standard electrode potential greater than -0.7 V and/or a metal compound containing a metal having a standard electrode potential greater than -0.7 V as a constituent element thereof so as not to influence battery performance.

Examples of metals having a standard electrode potential of -0.7 V or less include zinc, vanadium, chromium, manganese, zirconium, titanium, aluminum, beryllium, magnesium, sodium, calcium, strontium, barium, potassium, rubidium, and lithium. Examples of metal compounds containing metals having a standard electrode potential of -0.7 V or less as a constituent element thereof include hydrides, oxides, hydroxides, halides, nitrides, oxoacid salts, sulfates, nitrates, carbonates, acetates, metal complexes (coordination compounds), and organometallic compounds.

The low-potential metal material preferable contains zinc or a zinc compound from the viewpoint of suppressing deterioration of the water loss characteristics. Examples thereof include zinc, zinc oxide, zinc sulfate, zinc fluoride, zinc chloride, zinc bromide, zinc iodide, zinc sulfide, zinc nitrate, zinc trifluoromethanesulfonate, zinc phosphide, zinc phosphate, zinc diphosphate, zinc borate, zinc propionate, zinc arsenate, zinc carbonate, zinc thiocyanate, zinc pyrophosphate, zinc peroxide, zinc perchlorate, zinc acetate, zinc diethoxy, zinc 2-ethylhexanoate, zinc laurate, zinc stearate, zinc naphthenate, zinc acetylacetonate, zinc myristate, zinc palmitate, zinc ricinoleate, zinc undecylenate, zinc aspartate, zinc acetylmethionine, zinc gluconate, zinc citrate, zinc polypyrrolidone carboxylate, and zinc picolinate. Among the above zinc or zinc compounds, in order to suppress the deterioration of the water loss characteristics, zinc, zinc oxide, and zinc sulfate are more preferable, zinc oxide and zinc sulfate are further preferable, and zinc oxide is even further preferable.

From the viewpoint of suppressing deterioration of the water loss characteristics, the maximum diameter of the low-potential metal material is preferably 15 μm or less, more preferably 10 μm or less, and further preferably 7 μm or less. The lower limit of the maximum diameter that can be combined with these upper limits is not particularly limited, but may be, for example, 0.1 μm or more. From the viewpoint of suppressing deterioration of the water loss characteristics, the average of distances between dispersed phases which are closest to each other (also referred to as "distances between nearest dispersed phases" in the present disclosure) in a cross-sectional view in an MD-ND cross section of the conductive layer is preferably 0.2 μm to 2 μm, more preferably 0.2 μm to 1 μm, and further preferably 0.3 μm to 0.6 μm.

The amount of the low-potential metal material in the conductive layer is preferably 60 wt% or less relative to the weight of the entire conductive layer from the viewpoint of suppressing the occurrence of layer peeling. From the viewpoint of water loss characteristics, the amount of the low-potential metal material in the conductive layer is preferably 5 wt% or more relative to the weight of the entire conductive layer. The amount of low-potential metal material in the conductive layer is more preferably 10 wt% to 50 wt%, and more preferably 20 wt% to 40 wt%.

The median particle diameter (d50) of the low-potential metal material is preferably 0.01 μm to 50 μm, more preferably 0.01 μm to 30 μm, and further preferably 0.01 μm to 20 μm, from the viewpoint of suppressing the occurrence of peeling of the conductive layer.

Surfactant

The conductive layer may comprise a surfactant from the viewpoint of uniformly dispersing the conductive material of the conductive layer. The surfactant may be present in both of the continuous phase and the dispersed phase. When the material of the conductive layer is a carbon material, the surfactant can evenly distribute the carbon material over the entire conductive layer to form a uniform conductive path, which is more preferable. As the surfactant, various surfactants such as anionic surfactants such as sulfate ester type, phosphate ester type, carboxylic acid type, and sulfonic acid type; cationic surfactants such as quaternary ammonium salt type and amidoamine type; amphoteric surfactants such as alkylbetaine type, amidobetaine type, and amine oxide type; nonionic surfactants such as ether type, fatty acid ester type, and alkyl glucoxides; and polymeric surfactants such as polyacrylic acid, polyacrylate, polysulfonate, polynaphthalenesulfonate, polyalkylenepolyamine alkylene oxide, polyalkylenepolyimine alkylene oxide, polyvinyl picolidone, and cellulose type can be used. These are used alone or in combination of two or more for the purpose of preventing agglomeration of fillers. The surfactant is not limited to these as long as the effect of uniformly dispersing the conductive material of the conductive layer can be obtained. The surfactant preferably contains at least one selected from the group consisting of ionic surfactants, i.e., anionic surfactants, cationic surfactants, and amphoteric surfactants.

The amount of the surfactant is preferably 1 part by weight to 100 parts by weight, and preferably 10 parts by weight to 60 parts by weight, with the total of the conductive material of the conductive layer being 100 parts by weight.

Resin

The conductive layer preferably comprises a resin from the viewpoint of enhancing the binding property of the conductive material and suppressing peeling and detachment of the conductive layer from the substrate. The resin may be present in both the continuous phase and the dispersed phase. Examples of the resin include styrene resin, acrylic/urethane resin, acrylic/styrene resin, vinyl acetate/acrylic resin, styrene/butadiene resin, acrylonitrile/butadiene resin, natural rubber resin, polybutadiene resin (BR resin), methyl methacrylate/butadiene resin, 2-vinylpyridine/styrene/butadiene resin (VP resin), chloroprene resin (CR resin), polyolefin resins such as polyethylene, polypropylene, polybutene, or copolymers thereof, modified polyolefin resin obtained by chlorinating or acid-modifying a polyolefin resin, fluorine-containing resins such as polyvinylidene fluoride or polytetrafluoroethylene, a fluorine-containing rubber binder such as a vinylidene fluoride-hexafluoropropylene-tetrafluoroethylene copolymer or an ethylene-tetrafluoroethylene copolymer, (meth)acrylic acid-styrene-butadiene copolymer resins and hydrides thereof, polyvinyl alcohol resin, and polyvinyl alcohol-polyacetate copolymer resin.

Among the above resins, acrylic resins or styrene resins are more preferable, and acrylic resins are further preferable, from the viewpoint of improving binding properties and heat resistance. Note that as used herein, "acrylic resins" include acrylic copolymer resins such as acrylic/urethane resins, acrylic/styrene resins, acrylic/styrene/butadiene resins, vinyl acetate/acrylic resins, and polymers such as acrylic resins. Furthermore, as used herein, "styrene-based resins" include polymers such as styrene-based copolymer resins such as acrylic-styrene-based resins, styrene-butadiene-based resins, acrylic-styrene-butadiene-based resins, 2-vinylpyridine-styrene-butadiene-based resins, and styrene resins.

The amount of the resin is preferably 1 part by weight to 100 parts by weight, and preferably 10 parts by weight to 40 parts by weight, with the total of the conductive material of the conductive layer being 100 parts by weight.

These resins may contain one or more other components in the compositions exemplified above. The resin is not limited to one type, and a plurality of types can be used together. For example, a combination of an acrylic resin and a styrene resin can be used.

Thickener

The conductive layer preferably comprises a thickener from the viewpoint of suppressing peeling and detachment of the conductive layer from the substrate and forming a uniform conductive layer on the surface of the substrate. The thickener may be present in both the continuous phase and the dispersed phase. Examples of thickeners include synthetic polymers such as polyethylene glycol, polypropylene glycol, urethane-modified polyether, polyacrylic acid, polyvinyl alcohol, and vinyl methyl ether-maleic anhydride copolymer, cellulose derivatives such as carboxymethyl cellulose (CMC), carbomethoxy cellulose, hydroxyethyl cellulose, and hydroxyethyl cellulose, natural polysaccharides such as xanthan gum, diutan gum, welan gum, gellan gum, guar gum, carrageenan gum, and pectin, and starches such as dextrin and pregelatinized starch. The thickener can appropriately be selected from the viewpoint of slurry viscosity, pot life, and particle size distribution. One type of thickener can be used alone, and two or more types can be used in combination.

The amount of the thickener is preferably 0.1 parts by weight to 50 parts by weight, and more preferably 1 part by weight to 20 parts by weight, with the total of the conductive material of the conductive layer being 100 parts by weight.

Pores

The conductive layer preferably has pores from the viewpoint of improving ER. The conductive layer is typically porous. The maximum pore diameter of the pores is 15 $\mu$m or less, preferably 10 $\mu$m or less, and more preferably 7 $\mu$m or less when viewed in an MD-ND cross section of the conductive layer. The lower limit of the maximum pore diameter that can be combined with these upper limits is not particularly limited, but may be, for example, 0.1 $\mu$m or more in a cross-sectional view in an MD-ND cross section of the conductive layer.

From the viewpoint of improving the ER, the percentage of the area of the pores to the area of the conductive layer is preferably 1% or more and 60% or less in a cross-sectional view in an MD-ND cross section of the conductive layer. The percentage of the area of the pores is more preferably 1% or more and 55% or less, and further preferably 1% or more and 50% or less.

Substrate

The substrate is not particularly limited as long as it is microporous so that ions can permeate therethrough, and preferable examples thereof include porous membranes produced from natural or synthetic materials such as thermoplastic polymers such as polyvinyl and polyolefins, thermosetting polymers such as phenolic resins, natural or synthetic rubbers, rubber materials such as latex, fibrous materials such as synthetic wood pulp (SWP), glass fibers, synthetic fibers, and cellulose fibers, and combinations thereof, and microporous membranes produced from thermoplastic polymers are more preferable. Thermoplastic polymers include basically any acid resistant thermoplastic material suitable for lead-acid battery applications, and preferable thermoplastic polymers include, for example, polyvinyl and polyolefins. Examples of polyvinyl include polyvinyl chloride (PVC). Examples of polyolefins include polyethylene and polypropylene. Polyethylene includes, for example, ultra-high molecular weight polyethylene (UHMWPE).

## Lead-Acid Battery

The lead-acid battery of the present disclosure comprises the separator for a lead-acid battery of the present disclosure. The lead-acid battery is a lead-acid battery comprising a positive electrode, a negative electrode, and the separator of the present disclosure arranged between the positive electrode and the negative electrode. The lead-acid battery further comprises an electrolyte. The electrolyte preferably comprises at least one low-potential metal material selected from the group consisting of a metal having a standard electrode potential of -0.7 V or less, a metal compound containing a metal having a standard electrode potential of -0.7 V or less, and a combination thereof. In the lead-acid battery of the present disclosure, since the percentage of the area of the pores to the area of the conductive layer is 1% or more and 60% or less, and the electrolyte comprises a low-potential metal material, the lead-acid battery has excellent charge acceptance performance, excellent water loss characteristics when used under PSoC, reduced layer peeling in lead-acid batteries, and suitable ER. Though not to be limited by theory, the reason is presumed as follows. Specifically, since sulfation is suppressed due to conductive paths on the surface of the separator, charge acceptance performance can be improved. Furthermore, the low-potential metal material in the electrolyte reduces the decomposition reaction of water and can suppress the deterioration of water loss characteristics. Since the phase formed of the conductive material is a continuous phase, peeling of the layers is less likely to occur. Since the conductive layer has pores, the ER is suitable.

An electrolyte containing dilute sulfuric acid can be used as the electrolyte. The positive electrode grid constituting the positive electrode can be lead or a lead alloy, and the positive electrode active material can be a lead oxide, such as lead dioxide. The negative electrode grid constituting the negative electrode can be lead or a lead alloy, the negative electrode active material can be lead, and the lead negative electrode itself can be, for example, in a sponge-like form. The active materials of the positive electrode and negative electrode may contain 50 wt% or less of metal elements other than the lead or lead alloy. Dilute sulfuric acid is sulfuric acid having a specific gravity of 1.1 to 1.4, and the electrolyte may contain an additive. From the viewpoint of suppressing sulfation, the additive may contain, for example, aluminum ions. Other additives include metal ions such as lithium ions and sodium ions.

By providing the separator of the present disclosure between the positive electrode and the negative electrode, a lead-acid battery having excellent charge acceptance performance, excellent water loss characteristics when used under PSoC, and reduced layer peeling in lead-acid batteries, and suitable ER can be obtained. From the viewpoint of improving charge acceptance of the negative electrode, the separator preferably has the conductive layer on the negative electrode side. The separator for a lead-acid battery of the present disclosure can be used in both open lead-acid batteries and valve regulated lead-acid batteries.

## Method for Production of Separator for Lead-Acid Battery

Preparation of Substrate

Though the production method will be described below taking a substrate composed of a polyolefin, such as ultra-high molecular weight polyethylene, as an example, the substrate is not limited to substrates obtained by the following production methods, as long as a conductive layer can be formed thereon.

The method for the production of the substrate comprises the steps of: providing a thermoplastic polymer, such as ultra-high molecular weight polyethylene (hereinafter "UHMWPE"); providing a particulate filler; providing a processing plasticizer which is liquid at room temperature (25 °C); mixing the UHMWPE, a particulate filler, and a processing plasticizer to form a mixture; extruding the mixture through a die such as a slot die or inflation die to form a sheet; and extracting to partially or completely remove the plasticizer from the sheet, thereby forming a microporous matrix. After the step of forming the sheet, and before the extraction step, the sheet may be further processed by casting onto chilled rollers, calendering, or blowing. The cast or calendered sheet can then be subjected to the extraction process described above to partially or completely remove the plasticizer, thereby forming a microporous matrix.

The microporous matrix obtained by the above method contains UHMWPE, a plasticizer (when partially extracted), and a particulate filler dispersed throughout the matrix. The particulate filler preferably accounts for 5 weight percent to 95 weight percent of the microporous matrix. As used herein, the term "microporous matrix" refers to a structure having a network of interconnected fine pores, in which the entire microporous matrix is interconnected by the constituent material described above. Preferably, the fine pores occupy 25 percent to 90 percent of the volume of the microporous matrix. The method for the production of the substrate may further comprise, after the extraction step, stretching the microporous matrix and calendering the stretched microporous matrix to produce the final microporous material. By performing the calendering process, a substrate having excellent dimensional stability even at high temperatures can be formed.

Formation of Conductive Layer

The conductive layer may be laminated directly onto the surface of the substrate or indirectly as a laminate conductive layer of the substrate with a single layer or a laminate consisting of a plurality layers. In the latter case, a conductive layer may be introduced as a final step in the process of laminating a single layer or plurality of layers on the substrate, or after introducing the conductive layer into a portion of the laminate material, the laminate including the conductive layer may be overlapped on and introduced to the substrate.

The method for forming the conductive layer laminated on the substrate may further comprise the following steps: mixing a material forming the conductive layer with a solvent; introducing the material mixture onto the surface of the substrate or laminate; and drying the mixture to remove the solvent. The material is preferably homogenized in a solvent to form a mixture. The solvent may be an aqueous solvent or an organic solvent. The method for introducing includes applying the mixture in a wet state onto the surface of the substrate or laminate according to, for example, a die coating method or a gravure coating method. The substrate or laminate coated with the mixture may be subjected to further processing such as pressing.

Regarding the conductive layer, from the viewpoint of facilitating formation of a conductive layer having a uniform low surface electrical resistance, the wet mixture introduced onto the surface of the substrate or laminate in the drying step is more preferably gently dried at a constant rate in an atmosphere of 80°C. The drying method includes, for example, hot air drying. By evaporating the solvent at a constant rate, the mixture remains as a layer without uneven distribution of the solid content, forming a conductive layer having a uniform structure.

In order to adjust the average value of the distances between the nearest dispersed phases to 0.2 $\mu$m to 2.0 $\mu$m in a conductive layer, from the viewpoint of reduction in the number of steps, it is preferable to add particles of the low-potential metal material in the step of mixing a material forming the conductive layer with a solvent. At this time, the particles of the low-potential metal material may be pulverized using a pulverizer in order to adjust the distances between the nearest dispersed phases. For example, a slurry comprising the low-potential metal material particles, a dispersant, and water may be bead milled to obtain a suitable dispersion without agglomeration of the low-potential metal material particles. The average median particle diameter D50 of the low-potential metal material particles may preferably be adjusted to 20 $\mu$m or less. In order to adjust the distances between the nearest dispersed phases, the amount of the low-potential metal material particles to be added is adjusted to 60 wt% or less based on the total weight of the conductive layer to be formed, whereby aggregation is prevented and a suitable dispersion state can be obtained.

## Method for Production of Lead-Acid Battery

The lead-acid battery of the present disclosure can be produced by arranging the separator of the present disclosure between a positive electrode and a negative electrode, introducing these into a battery case, and injecting an electrolyte therein. The shape of the separator for a lead-acid battery can be determined so as to match each component of the lead-acid battery. Though not particularly limited, the separator preferably comprises the layer on the side of the negative electrode from the viewpoint of improving the charge acceptance of the negative electrode. The separator for a lead-acid battery of the present disclosure can be used in both open lead-acid batteries and valve regulated lead-acid batteries.

EXAMPLES

**Maximum pore diameter and area ratio of pores of conductive layer**

The maximum pore diameter of the conductive layer was obtained by the following method. A laminate obtained by stacking one lead oxide positive electrode, one lead negative electrode, and one to-be-measured separator in the order positive electrode - separator - negative electrode was placed in a polycarbonate container. Dilute sulfuric acid having a specific gravity of 1.28 was poured as an electrolyte into the container to prepare a lead-acid battery (2 V single cell), which was allowed to stand at 25°C for 24 hours. Thereafter, the separator was removed, washed with water, and dried.

From the dried separator, a 5 cm square portion was cut out where the conductive layer was visually free from chipping, rubbing, and color unevenness, and the laminate was uniformly present. In order to remove the additives from the separator, the separator was washed with ethanol (total immersion time of 4 hours, 3 changes of ethanol) and then air-dried. Thereafter, the cross section was processed using an ion milling device to prepare a smooth cross-section. An SM-09010 (manufactured by JEOL Ltd.) was used as the ion milling device, and ion milling was performed at an acceleration voltage of 3.5 kV to prepare an MD-ND cross section (a cross section parallel to the MD) of the separator. The cross-sectional sample was then affixed with a conductive adhesive (carbon-based) to an SEM sample stage for cross-sectional observation and dried. Thereafter, an osmium coater (HPC-30W, manufactured by Vacuum Device) was used as a conductive treatment, and osmium coating was performed under the conditions of an applied voltage adjustment knob setting of 4.5 and a discharge time of 3 seconds to obtain a microscopic sample. This MD-ND cross section was subjected to SEM observation using an SU8220 (manufactured by Hitachi High-Tech Co., Ltd.). The observation conditions were an acceleration voltage of 1 kV, using an Upper detector (LA100), a working distance of 5 mm, an observation magnification of 10,000-fold, and an image pixel count of 1280 × 960. After determining the observation field so that the entire thickness direction of the carbon coat layer fit therein, and after performing focusing and astigmatism correction, the brightness and contrast were set so that the pores could clearly be observed within the range where the brightness value does not saturate, and an image was captured. The SEM image obtained under the above conditions was subjected to pore analysis using ImageJ, which is free software, to determine the maximum pore diameter. Two sides of the acquired SEM image were selected so that only the conductive layer was included and the area was 10 $\mu m^2$ or more.

The analysis procedure is described below. First, the corresponding carbon coating layer region was cut out, and a median filter (radius: 4) was applied to remove noise. Thereafter, Otsu was selected as a threshold condition for image binarization, and the image was binarized. Dilate processing was performed once for the pores of this binary image. The area ($nm^2$) of each pore was then calculated by Analyze Particles to obtain the maximum pore diameter. In the analysis, pores hanging over the edge of the image were also included in the analysis. The maximum pore diameter is a circle-equivalent diameter (diameter of a circle having the same area as the pore area) calculated from the maximum pore area. The formula for calculating the maximum pore size is as follows.

$$\text{Maximum pore diameter} = 2 \times (\text{maximum pore area} / \pi)^{0.5}$$

The percentage of the area of the pores to the area of the conductive layer is the percentage of the total area ($nm^2$) of pores to the area ($nm^2$) of the image range analyzed above, and is as follows.

$$\text{Ratio of area of pores to area of conductive layer} = \{\text{total area of pores } (nm^2) / \text{area of image range analyzed } (nm^2)\} \times 100$$

**Maximum Diameter of Low-Potential Metal Material**

The maximum diameter of the low-potential metal material was obtained by the following method. From the prepared separator, a 5 cm square portion was cut out where the conductive layer was visually free from chipping, rubbing, and color unevenness, and the laminate was uniformly present. In order to remove the additives from the separator, the separator was washed with ethanol (total immersion time of 4 hours, 3 changes of ethanol) and then air-dried. Thereafter, the cross section was processed using an ion milling device to prepare a smooth cross-section. An SM-09010 (manufactured by JEOL Ltd.) was used as the ion milling device, and ion milling was performed at an acceleration voltage of 3.5 kV to prepare an MD-ND cross section (a cross section parallel to the MD) of the separator. The cross-sectional sample was then affixed with a conductive adhesive (carbon-based) to an SEM sample stage for cross-sectional observation and dried. An osmium coater (HPC-30W, manufactured by Vacuum Device) was used as a conductive treatment, and osmium coating was performed under the conditions of an applied voltage adjustment knob setting of 4.5 and a discharge time of 3 seconds to obtain a microscopic sample. This MD-ND cross section was subjected to SEM observation using an SU8220 (manufactured by Hitachi High-Tech Co., Ltd.). The observation conditions were an acceleration voltage of 1 kV, using an Upper detector (LA100), a working distance of 5 mm, an observation magnification of 10,000-fold, and an image pixel count of 1280 × 960. After determining the observation field so that the entire thickness direction of the carbon coat layer fit therein, and performing focusing and astigmatism correction, the brightness and contrast were set so that the particles could clearly be observed within a range in which the brightness value was not saturated, and an image was captured. The SEM image obtained under the above conditions was subjected to particle analysis of the low-potential metal material using ImageJ, which is free software, to determine the maximum diameter. Two sides of the obtained SEM image were selected so that the area of the obtained SEM image included only the conductive layer and the area was 10 $\mu m^2$ or more.

The procedure for particle analysis is described below. First, the corresponding carbon coating layer region was cut out, and a median filter (radius: 4) was applied to remove noise. Thereafter, Otsu was selected as a threshold condition for image binarization, and the image was binarized. Dilate processing was performed once on the particles of this binary image. The area ($nm^2$) of each particle was then calculated by Analyze Particles to obtain the maximum diameter. In the analysis, particles hanging over the edge of the image were also included in the analysis. The maximum diameter is a circle-equivalent diameter (diameter of a circle having the same area as the particle area) calculated from the maximum particle area. The formula for calculating the maximum diameter is as follows.

$$\text{Maximum diameter} = 2 \times (\text{maximum particle area} / \pi)^{0.5}$$

**Average Value of Distances Between Nearest Dispersed Phases**

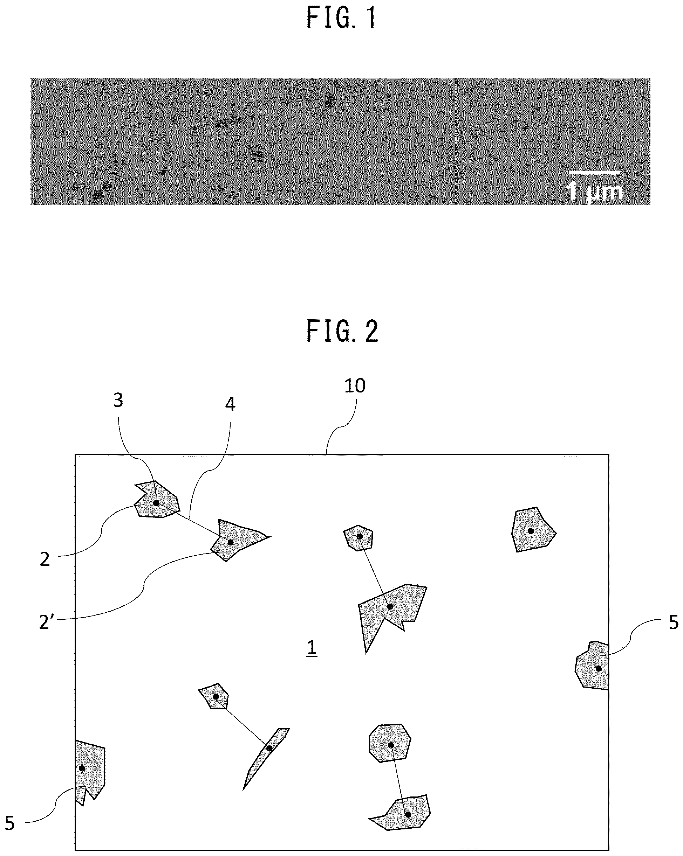

The average value of the distances between the nearest dispersed phases was calculated based on the binary image obtained above using the dispersion degree measurement of the image analysis software *"Azou-kun"* manufactured by Asahi Kasei Corporation. FIG. 2 is a conceptual diagram showing the measurement method. As shown schematically in FIG. 2, The "distances between nearest dispersed phases" are each a distance ($\mu$m) calculated by specifying the other dispersed phase (2') closest to one dispersed phase (2) in the continuous phase (1) in the analysis target image (10) and subtracting the sum of the circle-equivalent radii of the dispersed phases from the distance (4) between the centers of gravity of the pair of dispersed phases. The distance between the centers is the length of a straight line connecting the centers (3) of the nearest dispersed phases. The above software determines the center of gravity (3) of each dispersed phase present in the dispersed state, identifies the nearest dispersed phase to each dispersed phase, connects the centers of gravity of the closest dispersed phases with straight lines in a network, and after determining the length of each straight line, calculates the distance between the dispersed phases. The processing procedure is shown below. After reading the above binary image with software and setting the actual scale, "distance between walls" in the dispersion degree measurement of the analysis menu is selected and executed. During analysis, dispersed phase (5) which is in contact with the outer frame of the image is excluded from the analysis target by outer edge correction, and no additional filtering or the like is performed. A list of distances between nearest dispersed phases (for example, four distances between nearest dispersed phases (4) in FIG. 2) is obtained by this series of processes. The number average value ($\mu$m) of the distances between nearest dispersed phases is obtained. The image area for which the distances between nearest dispersed phases was calculated was the same area as the image area for the above particle analysis.

**Percentage of Area of Dispersed Phase to Continuous Phase**

The percentage of the area of the dispersed phase to the continuous phase was calculated based on the binary image obtained above. The above binary image was read by JupiterHub, and the percentage of the area of the particle portion of the low-potential metal material was calculated. The image area for calculating the percentage of the area of the dispersed phase to the continuous phase was the same area as the image area for the above particle analysis.

**Median Particle Diameter (D50)**

The median particle diameter of the low-potential metal material was measured for a mixture of the low-potential metal material and the ionic surfactant dispersed and mixed in water (hereinafter also referred to as the "metal compound dispersion"). A Microtrac Bell MT3300EXII (optical bench) and an SDC (sample circulator) were used for the measurement of the median particle diameter. Microtrac II was used as the software for measurement. The measurement conditions and analysis conditions were as follows.

[Measurement Conditions]

SetZero time: 10
Measurement time: 10
Number of measurements: 1

[Analysis Conditions]

Transparency: transparent
Particle refractive index: 2.00
Shape: non-spherical
Solvent refractive index: 1.333

**Unit Water Reduction Amount (Water Loss Characteristics)**

A lead-acid battery (2 V single cell) was produced by using a polycarbonate container, two lead oxide positive electrodes, and one lead negative electrode, and injecting dilute sulfuric acid having a specific gravity of 1.28 as an electrolyte. Using this lead-acid battery, a charge-discharge cycle test of the lead-acid battery in PSoC was carried out. For this test, a charge/discharge test device ACD-01 G-Version manufactured by Aska Denshi Co., Ltd. was used. The specific conditions of the charge-discharge cycle test are as follows: at 25°C, after the first discharge shown in (1) below was performed on the lead-acid battery in a fully charged state, (2) to (3) were set as one cycle, and the cycle is stopped when the 510th cycle was completed.

(1) Initial discharge: current rate 0.2 C (4 × I20), constant current discharge for 150 minutes
(2) Charging: current rate 0.35 C (7 × I20), voltage value 2.4 V, constant current-constant voltage charge for 40 minutes
(3) Discharge: current rate 0.35 C (7 × I20), voltage value 1.75 V, constant current-constant voltage discharge for 30 minutes

The difference between the lead-acid battery weight before the start of the cycle and after the 510th cycle was completed was obtained as the amount of water loss. A unit water reduction amount was obtained by dividing the water reduction amount by the battery capacity of the lead-acid battery. The obtained unit water reduction amount was evaluated according to the following criteria.

A: 1.39 g/Ah/510 cycles or less
B: greater than 1.39 g/Ah/510 cycles and 1.50 g/Ah/510 cycles or less
C: greater than 1.50 g/Ah/510 cycles

**Charge Acceptance Performance (DCA)**

DCA was measured by temporarily stopping the lead-acid battery during the cycle number measurement after the charge-discharge cycle test described above. Specifically, the cycle was stopped when the 510th cycle was completed, charging and discharging were performed under the following conditions, and the charging current value was measured.

(4) Charging (SoC 100%): Current rate 0.25 C (5 × I20), voltage value 2.67 V, constant current-constant voltage charge for 24 hours

(5) Discharge (SoC 90%): current rate 0.1 C (2 × I20), constant current discharge for 60 minutes

(6) Charging: current rate 2.0 C (40 × I20), voltage value 2.47 V, constant current-constant voltage charge for 60 seconds

(7) Discharge (SoC 80%): current rate 0.1 C (2 × I20), constant current discharge for 60 minutes

(8) Charging: current rate 2.0 C (40 × I20), voltage value 2.47 V, constant current-constant voltage charge for 60 seconds

(9) Discharge (SoC 70%): current rate 0.1 C (2 × I20), constant current discharge for 60 minutes

(10) Charging: current rate 2.0 C (40 × I20), voltage value 2.47 V, constant current-constant voltage charge for 60 seconds

(11) Discharge (SoC 60%): current rate 0.1 C (2 × I20), constant current discharge for 60 minutes

(12) Charging: current rate 2.0 C (40 × I20), voltage value 2.47 V, constant current-constant voltage charge for 60 seconds

In the charging of (10) above, the current value at 60 seconds was recorded, and the value obtained by dividing the current value by the electrode capacity was obtained as the DCA. The obtained DCA was evaluated according to the following criteria.

A: 0.70 A/Ah or more

B: 0.60 A/Ah or more and less than 0.70 A/Ah

C: less than 0.60 A/Ah

**Electrical Resistance (ER) in Electrolyte**

The ER is measured using a Palico measurement system manufactured by Caltronics. Dilute sulfuric acid having a specific gravity of 1.28 is used as the sulfuric acid bath, and the temperature of the sulfuric acid bath is 27 °C. First, the ER of the separator in a dry state is measured at three points, and the average value was obtained as the electrical resistance (ER) in a dry state. Before measurement, the separator is immersed in dilute sulfuric acid having a specific gravity of 1.28 and a temperature of 25 °C for 24 hours. The ER of the separator immersed in dilute sulfuric acid is measured at three points under the above measurement conditions, and the average value is obtained as the electrical resistance (ER) in the electrolyte. The unit is $\Omega \cdot cm^2$. The obtained ER is evaluated according to the following criteria.

A: ER in electrolyte is 1.10 times or less than ER in dry state

B: ER in electrolyte is more than 1.10 times and 1.20 times or less than ER in dry state

C: ER in electrolyte is more than 1.20 times the ER in dry state

**Layer Peeling**

24 hours after a 2 V single cell was produced, peeling of the layers was visually confirmed at the bottom of the cell. If black powder was found on the bottom, layer peeling was assumed to have occurred and was recorded in Table 1.

**Example 1**

A polyethylene separator (RipTide C manufactured by Daramic) was used as the substrate. The metal or metal compound, carbon black, an ionic surfactant, an acrylic copolymer latex, and a thickener as solids were dispersed and mixed in water to prepare a slurry for conductive layer formation. First, as the metal or metal compound, 20 wt% of zinc oxide (manufactured by Sakai Chemical Industry Co., Ltd., zinc oxide type 1) based on the total weight of solids in the slurry, and 6.0 wt% of Polity™ P-2000 manufactured by Lion Specialty Chemicals Co., Ltd. as an ionic surfactant, based on the total weight of solids in the slurry, was mixed with water, and was pulverized and dispersed using a pulverizer so that the median particle diameter D50 was 20 μm or less to obtain a zinc compound dispersion. Next, the zinc compound dispersion, 45.8 wt% of PBX52 manufactured by Cabot Corporation as carbon black based on the total weight of solids in the slurry, 13.7 wt% of Polity™ P-2000 manufactured by Lion Specialty Chemicals Co., Ltd. as an ionic surfactant based on the weight of the total solids in the slurry, 13.2 wt% of Polytron™ A65S manufactured by Asahi Kasei Corporation as the acrylic copolymer latex based on the total weight of solids in the slurry, and 1.3 wt% of carboxymethyl cellulose (CMC) as the thickener based on the total weight of solids in the slurry were dispersed and mixed to produce a slurry.

Using an applicator, the slurry was manually applied (hand-coated) onto the side of the substrate having a back web, and dried in an oven at 80°C for 5 minutes to obtain a separator comprising a conductive layer. At this time, the applicator gap (clearance formed between the separator and the applicator) was 45 $\mu$m. The obtained separator was cut into a rectangle, folded in half along the long side so that the conductive layer was on the inside, and both ends of the separator were closed in a direction perpendicular to the folded side to prepare a bag-like separator with one side open. A negative electrode was inserted into the bag-shaped separator. A lead-acid battery was obtained with a substrate and the obtained conductive layer by the method described in the section "Unit Water Reduction Amount (Water Loss Characteristics)", and the results of evaluation according to the above evaluation methods are shown in Table 1.

**Example 2**

Example 2 was carried out in the same manner as Example 1 except for the following points. For the zinc compound dispersion, the amount of zinc oxide (manufactured by Sakai Chemical Industry Co., Ltd., zinc oxide type 1) was 40 wt% based on the total weight of solids in the slurry, and the amount of ionic surfactant (P-2000) was 12.0 wt% based on the total weight of solids in the slurry. For the slurry, the amount of carbon black (PBX52) was 25.8 wt% based on the total weight of solids in the slurry, and the amount of ionic surfactant (P-2000) was 7.7 wt% based on the total weight of solids in the slurry.

**Example 3**

Example 3 was carried out in the same manner as Example 1 except for the following points. For the zinc compound dispersion, the amount of zinc oxide (manufactured by Sakai Chemical Industry Co., Ltd., zinc oxide type 1) was 5 wt% based on the total weight of solids in the slurry, and the amount of ionic surfactant (P-2000) was 1.5 wt% based on the total weight of solids in the slurry. For the slurry, the amount of carbon black (PBX52) was 60.8 wt% based on the total weight of solids in the slurry, and the amount of ionic surfactant (P-2000) was 18.2 wt% based on the total weight of solids in the slurry.

**Example 4**

Example 4 was carried out in the same manner as Example 1 excluding the following points. For the zinc compound dispersion, the amount of zinc oxide (manufactured by Sakai Chemical Industry Co., Ltd., zinc oxide type 1) was 60 wt% based on the total weight of solids in the slurry, and the amount of ionic surfactant (P-2000) was 18 wt% based on the total weight of solids in the slurry. For the slurry, the amount of carbon black (PBX52) was 5.8 wt% based on the total weight of solids in the slurry, and the amount of ionic surfactant (P-2000) was 1.7 wt% based on the total weight of solids in the slurry.

**Example 5**

Example 5 was carried out in the same manner as Example 3, except that the metal or metal compound of Example 3 was changed to LPZINC-2 manufactured by Sakai Chemical Industry Co., Ltd.

**Example 6**

Example 6 was carried out in the same manner as Example 2, except that the metal or metal compound of Example 2 was changed to LPZINC-11 manufactured by Sakai Chemical Industry Co., Ltd.

**Example 7**

Example 7 was carried out in the same manner as Example 1, except that the metal or metal compound of Example 1 was changed to zinc sulfate (manufactured by FujiFilm Wako Pure Chemical Industries, product code 262-00425).

**Example 8**

Example 8 was carried out in the same manner as Example 2, except that the metal or metal compound of Example 2 was changed to zinc sulfate (manufactured by FujiFilm Wako Pure Chemical Industries, product code 262-00425).

**Example 9**

Example 9 was carried out in the same manner as in Example 1, except for the following points. For the slurry, the carbon black was 22.9 wt% of PBX52 manufactured by Cabot TM Corporation based on the total weight of solids in the slurry, and 22.9 wt% of Denka Black HS-100 manufactured by Denka Co., Ltd. based on the total weight of solids in the slurry, the amount of ionic surfactant (P-2000) was 13.7 wt% based on the total weight of solids in the slurry, the amount of the acrylic copolymer latex (A65S) was 13.2 wt% based on the total weight of solids in the slurry, and the amount of the thickener (CMC) was 1.3 wt% based on the total weight of solids in the slurry.

**Example 10**

Example 10 was carried out in the same manner as in Example 1, except for the following points. For the slurry, the amount of carbon black (PBX52) was 44.6 wt% based on the total weight TM of solids in the slurry, and 2.5 wt% of TUBALL BATT manufactured by Kusumoto Kasei Co., Ltd., which is a mixture of carbon nanotubes and a thickener, based on the total weight of solids in the slurry, was added, the amount of ionic surfactant (P-2000) was 13.7 wt% based on the total weight of solids in the slurry, and the amount of acrylic copolymer latex (A65S) was 13.2 wt% based on the total weight of solids in the slurry.

**Example 11**

Example 11 was carried out in the same manner as Example 1, except for the following points. For the slurry, the carbon black was 22.3 wt% of PBX52 based on the total weight of solids in the TM slurry, and 22.3 wt% of Denka Black HS-100 manufactured by Denka Co., Ltd. based on the TM total weight of solids in the slurry, and 2.5 wt% of TUBALL BATT manufactured by Kusumoto Kasei Co., Ltd., which is a mixture of carbon nanotubes and a thickener, based on the total weight of solids in the slurry, was added, the amount of ionic surfactant (P-2000) was 13.7 wt% based on the total weight of solids in the slurry, and the amount of acrylic copolymer latex (A65S) was 13.2 wt% based on the total weight of solids in the slurry.

**Example 12**

Example 12 was carried out in the same manner as Example 1 except that the separator obtained in Example 1 was cut into a rectangle and folded in half in the long side direction so that the conductive layer was on the outside.

**Example 13**

Example 13 was carried out in the same manner as Example 1, except that the slurry obtained in Example 1 was manually applied (hand-coated) onto both sides of the substrate.

**Example 14**

Example 14 was carried out in the same manner as Example 3, except that the zinc or zinc compound of Example 3 was changed to LPZINC-11 manufactured by Sakai Chemical Industry Co., Ltd.

**Example 15**

Example 15 was carried out in the same manner as Example 3, except that the zinc or zinc compound of Example 3 was changed to LPZINC-5 manufactured by Sakai Chemical Industry Co., Ltd.

**Example 16**

Example 16 was carried out in the same manner as Example 1, except that the zinc or zinc compound of Example 1 was changed to LPZINC-11 manufactured by Sakai Chemical Industry Co., Ltd.

**Example 17**

Example 17 was carried out in the same manner as Example 2, except that the zinc or zinc compound of Example 2 was changed to LPZINC-5 manufactured by Sakai Chemical Industry Co., Ltd.

**Example 18**

Example 18 was carried out in the same manner as Example 1, except that the zinc or zinc compound of Example 1 was changed to LPZINC-5 manufactured by Sakai Chemical Industry Co., Ltd.

**Example 19**

Example 19 was carried out in the same manner as Example 1, except for the following points. For the lead compound dispersion, the amount of zinc oxide (manufactured by Sakai Chemical Industry Co., Ltd., zinc oxide type 1) was 49.4 wt% based on the total weight of solids in the slurry, and the amount of ionic surfactant (P-2000) was 1 wt% based on the total weight of solids in the slurry. For the slurry, the amount of carbon black (PBX52) was 32.9 wt% based on the total weight of solids in the slurry, and 0.1 wt% of TUBALL BATT™ $H_2O$ CMC 0.4% manufactured by Kusumoto Kasei Co., Ltd., which is a mixture of carbon nanotubes and a thickener, based on the weight of the total solids in the slurry was added, the amount of ionic surfactant (P-2000) was 9.4 wt% based on the total weight of solids in the slurry, the amount of acrylic copolymer latex (A65S) was 6.6 wt% based on the total weight of solids in the slurry, and the amount of thickener (CMC) was 0.6 wt% based on the total weight of solids in the slurry.

**Example 20**

Example 20 was carried out in the same manner as Example 1, except for the following points. For the lead compound dispersion, the amount of zinc oxide (manufactured by Sakai Chemical Industry Co., Ltd., zinc oxide type 1) was 39.5 wt% based on the total weight of solids in the slurry, and the amount of ionic surfactant (P-2000) was 1 wt% based on the total weight of solids in the slurry. For the slurry, the amount of carbon black (PBX52) was 39.5 wt% based on the total weight TM of solids in the slurry, and 0.3 wt% of TUBALL BATT™ $H_2O$ CMC 0.4% manufactured by Kusumoto Kasei Co., Ltd., which is a mixture of carbon nanotubes and a thickener, based on the weight of the total solids in the slurry was added, the amount of ionic surfactant (P-2000) was 11.2 wt% based on the total weight of solids in the slurry, the amount of acrylic copolymer latex (A65S) was 7.9 wt% based on the total weight of solids in the slurry, the amount of thickener (CMC) was 0.6 wt% based on the total weight of solids in the slurry, and the applicator gap was 35 μm.

**Example 21**

Example 21 was carried out in the same manner as Example 1, except for the following points. Iron oxide (FEO02PB manufactured by Kojundo Chemical Laboratory Co., Ltd.) was used in place of the zinc oxide (manufactured by Sakai Chemical Industry Co., Ltd., zinc oxide type 1). The prepared substrate and the conductive layer were cut into rectangles, immersed in dilute sulfuric acid at 25°C for 24 hours, then washed with water, air-dried for 24 hours, and dried at 80°C for 5 minutes. A lead-acid battery was obtained by using an electrolyte in which zinc was pre-dissolved in dilute sulfuric acid having a specific gravity of 1.28 to a concentration of 0.24 g/liter in terms of metal.

**Example 22**

Example 22 was carried out in the same manner as Example 2, except for the following points. Iron oxide (FEO02PB manufactured by Kojundo Chemical Laboratory Co., Ltd.) was used in place of the zinc oxide (manufactured by Sakai Chemical Industry Co., Ltd., zinc oxide type 1). The prepared substrate and the conductive layer were cut into rectangles, immersed in dilute sulfuric acid at 25°C for 24 hours, then washed with water, air-dried for 24 hours, and dried at 80°C for 5 minutes. A lead-acid battery was obtained by using an electrolyte in which zinc was pre-dissolved in dilute sulfuric acid having a specific gravity of 1.28 to a concentration of 0.48 g/liter in terms of metal.

**Comparative Example 1**

Comparative Example 1 was carried out in the same manner as Example 1, except that for the slurry, iron oxide (FEO02PB manufactured by Kojundo Chemical Laboratory Co., Ltd.) was used in place of the zinc oxide (manufactured by Sakai Chemical Industry Co., Ltd., zinc oxide type 1) of Example 1.

**Comparative Example 2**

Comparative Example 2 was carried out in the same manner as Example 1, except for the following points. The zinc compound dispersion liquid was not contained. For the slurry, the amount of carbon black (PBX52) was 64.6 wt% based on the total weight of solids in the slurry, and 2.5 wt% of TUBALL BATT™ $H_2O$ CMC 0.4% manufactured by Kusumoto Kasei Co., Ltd., which is a mixture of carbon nanotubes and a thickener, based on the weight of the total solids in the slurry was added, the amount of ionic surfactant (P-2000) was 19.7 wt% based on the total weight of solids in the slurry, the amount of acrylic copolymer latex (A65S) was 13.2 wt% based on the total weight of solids in the slurry, and the aprotic polar solvent was 5 wt% of N-methyl-2-pyrrolidone (NMP) based on the total weight of the slurry.

**Comparative Example 3**

Comparative Example 3 was carried out in the same manner as Example 1, except for the following points. For the zinc compound dispersion, the amount of zinc oxide (manufactured by Sakai Chemical Industry Co., Ltd., zinc oxide type 1) was 64.6 wt% based on the total weight of solids in the slurry, and the amount of ionic surfactant (P-2000) was 19.7 wt% based on the total weight of solids in the slurry. For the slurry, carbon black (PBX52) was not contained, the ionic surfactant (P-2000) was not contained, the amount of acrylic copolymer latex (A65S) was 13.2 wt% based on the total weight of solids in the slurry, and the amount of thickener (CMC) was 0.6 wt% based on the total weight of solids in the slurry.

**Comparative Example 4**

Comparative Example 4 was carried out in the same manner as Example 21, except that dilute sulfuric acid having a specific gravity of 1.28 was used as the electrolyte.

Table 1

| | Maximum pore diameter of conductive layer [μm] | Pore area percentage [%] | Avg of distances between nearest dispersed phases [μm] | Dispersed phase area percentage [%] | Amount of low-potential metal material in the entire conductive layer [wt%] | Maximum diameter of low-potential metal material [μm] | Zn metal conversion content [g/L] | Water loss characteristics | DCA | ER | Layer Peeling |
|---|---|---|---|---|---|---|---|---|---|---|---|
| Ex 1 | 0.5 | 10 | 0.6 | 8 | 20 | 0.4 | 0.17 | A | A | B | N/A |
| Ex 2 | 0.6 | 15 | 0.4 | 16 | 40 | 0.6 | 0.35 | A | A | A | N/A |
| Ex 3 | 0.3 | 3 | 1.2 | 2 | 5 | 0.3 | 0.04 | B | A | B | N/A |
| Ex 4 | 1.1 | 25 | 0.3 | 24 | 60 | 1 | 0.52 | A | B | A | N/A |
| Ex 5 | 1.5 | 3 | 2 | 2 | 5 | 1.5 | 0.04 | B | A | B | N/A |
| Ex 6 | 15 | 15 | 0.2 | 16 | 40 | 15 | 0.35 | A | B | A | N/A |
| Ex 7 | 0.6 | 9 | 0.6 | 8 | 20 | 0.5 | 0.17 | A | A | B | N/A |
| Ex 8 | 1 | 15 | 0.3 | 16 | 40 | 1 | 0.35 | A | A | A | N/A |
| Ex 9 | 0.5 | 10 | 0.6 | 8 | 20 | 0.4 | 0.17 | A | A | A | N/A |
| Ex 10 | 0.5 | 9 | 0.6 | 8 | 20 | 0.4 | 0.17 | A | A | B | N/A |
| Ex 11 | 0.4 | 9 | 0.6 | 8 | 20 | 0.4 | 0.17 | A | A | A | N/A |
| Ex 12 | 0.5 | 10 | 0.6 | 8 | 20 | 0.4 | 0.17 | A | B | A | N/A |
| Ex 13 | 0.5 | 8 | 0.6 | 8 | 20 | 0.4 | 0.17 | A | B | A | N/A |
| Ex 14 | 15 | 3 | 2 | 2 | 5 | 15 | 0.04 | B | A | B | N/A |
| Ex 15 | 8 | 3 | 2 | 2 | 5 | 8 | 0.04 | B | A | B | N/A |
| Ex 16 | 15 | 10 | 1.2 | 8 | 20 | 15 | 0.17 | A | B | A | N/A |
| Ex 17 | 8 | 17 | 0.2 | 16 | 40 | 8 | 0.35 | A | B | A | N/A |
| Ex 18 | 8 | 9 | 1.2 | 8 | 20 | 8 | 0.17 | A | B | A | N/A |
| Ex 19 | 0.5 | 21 | 0.6 | 20 | 50 | 0.4 | 0.44 | A | A | A | N/A |
| Ex 20 | 0.7 | 15 | 0.4 | 16 | 40 | 0.6 | 0.25 | A | A | A | N/A |
| Ex 21 | 0.4 | 9 | 0.6 | N/A | N/A | N/A | 0.24 | A | A | A | N/A |
| Ex 22 | 0.6 | 17 | 0.4 | N/A | N/A | N/A | 0.48 | A | A | A | N/A |

(continued)

| | Maximum pore diameter of conductive layer [μm] | Pore area percentage [%] | Avg of distances between nearest dispersed phases [μm] | Dispersed phase area percentage [%] | Amount of low-potential metal material in the entire conductive layer [wt%] | Maximum diameter of low-potential metal material [μm] | Zn metal conversion content [g/L] | Water loss characteristics | DCA | ER | Layer Peeling |
|---|---|---|---|---|---|---|---|---|---|---|---|
| Comp Ex 1 | 1 | 11 | 0.5 | N/A | N/A | 1 (iron oxide) | N/A | C | B | B | N/A |
| Comp Ex 2 | N/A | N/A | N/A | N/A | N/A | N/A | N/A | C | A | C | N/A |
| Comp Ex 3 | N/A | N/A | N/A | N/A | 100 | N/A | 0.24 | A | C | A | N/A |
| Comp Ex 4 | 0.4 | 9 | 0.6 | N/A | N/A | N/A | N/A | C | B | A | N/A |

FIG. 1 is an example of an MD-ND cross-sectional image of the separator for a lead-acid battery having a conductive layer of Example 1, captured by SEM. In FIG. 1, particles which appear dark gray to black as compared to the background are the dispersed phase formed of zinc oxide particles.

INDUSTRIAL APPLICABILITY

The separator for a lead-acid battery of the present disclosure is useful for lead-acid batteries, such as flooded batteries (FB), and in particular, is suitable as a separator for enhanced flooded batteries (EFB).

DESCRIPTION OF REFERENCE SIGNS

1     continuous phase
2     dispersed phase
2'    dispersed phase
3     center of gravity of dispersed phase
4     distance between centers of gravity
5     dispersed phase in contact with outer frame of image
10    analysis target image

**Claims**

1. A separator for a lead-acid battery, comprising a substrate and a conductive layer laminated on at least one surface of the substrate,
wherein the conductive layer has a continuous phase formed of an electrically conductive material, and a dispersed phase in the continuous phase, the dispersed phase being formed of at least one low-potential metal material selected from the group consisting of a metal having a standard electrode potential of -0.7 V or less, a metal compound containing the metal, and a combination thereof.

2. The separator for a lead-acid battery according to claim 1, wherein a percentage of an area of the dispersed phase to an area of the continuous phase in a cross-sectional view in an MD-ND cross section of the conductive layer is 1% or more and 60% or less.

3. The separator for a lead-acid battery according to claim 1 or 2, wherein the low-potential metal material comprises zinc or a zinc compound.

4. The separator for a lead-acid battery according to any one of claims 1 to 3, wherein the conductive material comprises a carbon material.

5. The separator for a lead-acid battery according to any one of claims 1 to 4, wherein an average value of distances between nearest dispersed phases in an MD-ND cross section of the conductive layer is 0.1 $\mu$m to 2 $\mu$m.

6. The separator for a lead-acid battery according to any one of claims 1 to 5, wherein a maximum diameter of the low-potential metal material is 0.1 $\mu$m or more and 15 $\mu$m or less.

7. The separator for a lead-acid battery according to any one of claims 1 to 6, wherein an amount of the low-potential metal material is 5 wt% to 60 wt% relative to the weight of the entire conductive layer.

8. The separator for a lead-acid battery according to any one of claims 1 to 7, wherein the low-potential metal material is at least one selected from the group consisting of zinc oxide and zinc sulfate.

9. The separator for a lead-acid battery according to any one of claims 1 to 8, wherein the carbon material comprises at least one selected from the group consisting of furnace black, acetylene black, ketjen black, and carbon nanotubes.

10. A lead-acid battery, comprising a positive electrode, a negative electrode, and the separator according to any one of claims 1 to 9 between the positive electrode and the negative electrode.

11. A lead-acid battery, comprising a positive electrode, a negative electrode, a separator arranged between the positive electrode and the negative electrode, and an electrolyte,
wherein the separator comprises:

a substrate and a conductive layer laminated on at least one surface of the substrate,
the conductive layer comprises a conductive material, and pores are present in the conductive layer,
a percentage of an area of the pores to an area of the conductive layer in a cross-sectional view in an MD-ND cross section of the conductive layer is 1% or more and 60% or less, and
the electrolyte comprises at least one low-potential metal material selected from the group consisting of a metal having a standard electrode potential of -0.7 V or less, a metal compound containing the metal, and a combination thereof.

12. The lead-acid battery according to claim 11, wherein the low-potential metal material is zinc or a zinc compound.

13. The lead-acid battery according to claim 11 or 12, wherein the conductive material comprises a carbon material.

# FIG. 1

# FIG. 2

# EP 4 307 454 A1

<table>
<tr><td colspan="2" align="center">INTERNATIONAL SEARCH REPORT</td><td>International application No.<br><br>**PCT/JP2022/009820**</td></tr>
</table>

**A.    CLASSIFICATION OF SUBJECT MATTER**

*H01M 50/451*(2021.01)i; *H01M 10/08*(2006.01)i; *H01M 50/431*(2021.01)i; *H01M 50/434*(2021.01)i; *H01M 50/443*(2021.01)i; *H01M 50/46*(2021.01)i; *H01M 50/489*(2021.01)i
FI:   H01M50/451; H01M10/08; H01M50/431; H01M50/434; H01M50/443 M; H01M50/46; H01M50/489

According to International Patent Classification (IPC) or to both national classification and IPC

**B.    FIELDS SEARCHED**

Minimum documentation searched (classification system followed by classification symbols)

H01M50/451; H01M10/08; H01M50/431; H01M50/434; H01M50/443; H01M50/46; H01M50/489

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2020-533741 A (DARAMIC, LLC) 19 November 2020 (2020-11-19) | 1-13 |
| A | JP 2020-524381 A (DARAMIC, LLC) 13 August 2020 (2020-08-13) | 1-13 |
| A | JP 2019-505969 A (DARAMIC, LLC) 28 February 2019 (2019-02-28) | 1-13 |
| A | JP 2018-530125 A (DARAMIC, LLC) 11 October 2018 (2018-10-11) | 1-13 |
| A | JP 2013-84362 A (GS YUASA CORP) 09 May 2013 (2013-05-09) | 1-13 |

☐ Further documents are listed in the continuation of Box C.        ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **13 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/009820**

| Patent document cited in search report | | | Publication date (day/month/year) | Patent family member(s) | | | Publication date (day/month/year) |
|---|---|---|---|---|---|---|---|
| JP | 2020-533741 | A | 19 November 2020 | US | 2020/0313135 | A1 | |
| | | | | WO | 2019/051159 | A1 | |
| | | | | KR | 10-2020-0050986 | A | |
| | | | | CN | 111316469 | A | |
| JP | 2020-524381 | A | 13 August 2020 | US | 2018/0366710 | A1 | |
| | | | | WO | 2018/236973 | A1 | |
| | | | | KR | 10-2020-0010588 | A | |
| | | | | CN | 111194490 | A | |
| JP | 2019-505969 | A | 28 February 2019 | US | 2019/0058175 | A1 | |
| | | | | WO | 2017/142522 | A1 | |
| | | | | WO | 2017/143212 | A1 | |
| | | | | KR | 10-2018-0108849 | A | |
| | | | | CN | 108886123 | A | |
| JP | 2018-530125 | A | 11 October 2018 | US | 2017/0098810 | A1 | |
| | | | | US | 2019/0386280 | A1 | |
| | | | | WO | 2017/062461 | A1 | |
| | | | | KR | 10-2018-0053417 | A | |
| | | | | CN | 108292725 | A | |
| JP | 2013-84362 | A | 09 May 2013 | (Family: none) | | | |

Form PCT/ISA/210 (patent family annex) (January 2015)

**REFERENCES CITED IN THE DESCRIPTION**

**Patent documents cited in the description**

- WO 2017143212 A
- WO 2015171595 A
- WO 2017062461 A